# EUROPEAN PATENT APPLICATION

(11) **EP 4 044 425 A1**
(43) Date of publication of application: **17.08.2022**
(21) Application number: 21382120.0
(22) Date of filing: 15.02.2021
(51) Int. Cl.: H02S 20/20, F24S 20/70

(54) **ASSEMBLY COMPRISING A BASE AND A PHOTOVOLTAIC MODULE AND METHODS FOR MANUFACTURING IT**

(71) Applicant: Research & Development Concretes SL, 46005 Valencia (ES); Fundación Tecnalia Research & Innovation, 20009 Donostia-San Sebastian, Guipuzcoa (ES)
(72) Inventor: Camacho Torregrosa, Esteban, 46005 Valencia (ES); López Martínez, Juan Ángel, 46005 Valencia (ES); Sanz Martínez, Asier, 20009 San Sebastián - Guipúzcoa (ES); Boscolo, Francesco, 20009 San Sebastián - Guipúzcoa (ES); Cano Iranzo, Francisco Javier, 20009 San Sebastián - Guipúzcoa (ES)
(74) Representative: Balder IP Law, S.L.

(57) **Abstract**

Assembly (1) comprising a base (2) and a photovoltaic module (3), the base comprising a concrete (12) enclosing at least one volume (20) filled with a second material (21) or a gas, the volume and the second material or gas being selected such that the density of the assembly (1) is less than 1000 kg/m³, the concrete comprising reinforcing fibres. The invention also relates to methods for manufacturing it.

## Description

### TECHNICAL FIELD

This invention relates to an assembly destined to float on water, the assembly comprising a base and a photovoltaic module, a platform comprising these assemblies and a process of manufacturing the assemblies.

### STATE OF THE ART

The use of solar photovoltaic modules installed on the surfaces of water, such as artificial basins, lakes or sea, is known as floating photovoltaic. These installations provide many advantages over land-based solar photovoltaic installations. For example, they reduce land use which may be more expensive than use of aqueous surfaces, their energy output is increased due to the natural cooling of water and they may be decommissioned more easily than their land-based counterparts.

However, the photovoltaic modules on water surfaces require additional components, at least floating devices and mounting structures. Floaters are typically made mainly or entirely of plastic and metal structures have been used to mount the solar photovoltaic modules. The durability and competitiveness of such approaches are strongly limited due to components degradation and their coupling. Plastic floaters aging and connections is poor, the heavy mounting structures suffer corrosion and the many mechanical joints are exposed to constant fatigue, particularly in harsh conditions. These developments unfortunately do not offer a feasible solution and the benefits of solar photovoltaic floating application could not be fully achieved.

EP2646757B1 teaches a assembly comprising means for collecting solar energy, such as solar concentrators or photovoltaic cells, an upper face, which comprises a one-piece floating structure on which are mounted the means for capturing solar energy. The solar panels are configured to float autonomously with respect to each other. Their floating structure is so called because it supports and carries the means of capture (it is in this sense "structural"). The floating structure comprises a frame in which are stacked, from bottom to top, at least one support plate, in particular in fiberglass, at least one floating plate, in particular in polymer, and a layer comprising means for capturing solar energy.

Due to the light weight of the above mentioned assembly and its loose connection to the surrounding assemblies of the platform, the assembly may easily be stolen. The multi-layer structure of the above assembly also puts it at risk of being deliberately disassembled with the valuable parts stolen, or being separated by natural wear and tear. Furthermore, the high plastic content of the solar panels reduces the advantages provided by the natural cooling through the water.

The provision of an assembly which overcomes the above shortcomings would therefore be advantageous.

### DESCRIPTION OF THE INVENTION

For overcoming the mentioned drawbacks and to achieve the aforementioned aims, the invention proposes an assembly comprising a base and a photovoltaic module, wherein the base comprises a concrete enclosing at least one volume filled with a second material or a gas, the volume and the second material or gas being configured such that the density of the assembly is less than 1000 kg/m³, the concrete comprising reinforcing fibres.

The density of the assembly may be lower than the density of water such that the assembly may float on the water.

The moulded base may be a concrete base with compressive strength between 60 MPa and 200 MPa.

The concrete base may comprise light-weight filler particles of up to 4 mm in diameter such that the density of the concrete is 1.6 - 1.7 ton/m³. The addition of lightweight filler particles reduces the overall density of the assembly.

The concrete base may have a fiber content of between 60 kg/m³ and 180 kg/m³. The fiber content of the concrete improves its integrity such that small bumps and impacts do not break the concrete base. This increases the toughness and impact strength of the assembly, which should provide a high durability even under harsh environmental conditions.

The concrete base may have a flexural strength between 10 and 30 MPa.

As an example, the concrete base may comprise an ultra high performance concrete with the above characteristics and may have a low water:cement ratio. The High Performance Fiber Reinforced concrete (HPFRC) proposed has the advantage of being self-compacting before setting which allows the photovoltaic panel to be submerged to the required level during the manufacturing process, allowing for minor differences in the quantity of concrete mixture added to the mould. Furthermore, HPFRC has a bonding strength several times higher than that conventional concrete, securing the photovoltaic module in place without the use of glues or resins. A potential cracking of the concrete whilst in this fixed state would not be likely to cause cracks larger than 30 micrometres, such that the photovoltaic module is not damaged. HPFRC water-permeability is dozens of times lower than conventional concrete, further protecting the photovoltaic module and is fire resistant. This provides a significant advantage over traditional plastic floaters.

A low water:cement ratio prevents humidity from accessing the interior of the solar panel through the pores of the concrete since they are not interconnected, and prevents water from entering through capillary action, which further isolates the photovoltaic module.

In some preferred embodiments, at least one of the surfaces of the photovoltaic module is made of a resin, preferably an epoxy resin, such that the concrete is in contact with the resin. In some preferred embodiments, the back surface and lateral surfaces are made of resin, preferably and epoxy resin. In the present description, front surface should be understood as the surface that receives solar radiation and that obviously is not embedded in concrete in any case. The lateral or perimeter surfaces are the vertical sides of height h of the module. And the back surface is the face of the module opposite to the solar collection surface.

The inventors have found that the interface formed between concrete and resin is very robust. The combined mechanical characteristics of both provide a stable and durable grip of the photovoltaic module to the concrete. In particular, the concrete used for the invention can be adapted to the roughness of the resin, and lead to an intimate bond capable of resisting both shear and normal stresses. It is also conceivable to provide the photovoltaic module in its resin surface with textures or shapes (channels, concavities, etc.) that on the one hand guarantee its release from the mould (from the manufacturing process) and that on the other hand provide sufficient grip.

It should be noted that this synergistic combination between concrete and resin does not occur between the concrete and the usual materials or surface finishes used in photovoltaic modules, such as laminated sheets based on fluoropolymers

In this embodiment, the resin may comprise reinforcements, preferably made of glass fibre or carbon fibre.

Also preferably, in this embodiment, the front surface of the photovoltaic module can be further made of a transparent resin, preferably an epoxy resin, preferably comprising glass reinforcements, preferably reinforcing fibre glass. The front surface being the one to be irradiated by the sun.

The embodiments based on the complete embedment of the panel in the concrete, with the sole use of the embedment itself as a means of integrating the panel with the concrete, lead to obtaining an authentic one-piece or monobloc product, in the sense that it is perceived as a single plate, robust and functional, capable of being handled, transported, assembled and used. By monobloc it is also understood that it is a product totally devoid of screws, welding elements, cross members or beams, metal parts susceptible to corrosion. Only a panel, already compact, embedded and therefore protected, and a reinforced concrete matrix (thanks to the fibers) are used for the assembly. Obviously, for the union between panels, auxiliary parts or fittings may be used, but they will not be part of the assembly, and their replacement or repair will be much easier. What can be foreseen is that in the molding of the concrete matrix, the forms (such as molded tubular channels) are foreseen for the fitting of parts other than the monobloc assembly.

The monobloc product may have a specific geometry in order to give the solar photovoltaic module a tilting angle that may enhance the energy output and prevent from soiling deposition.

The moulded base of the assembly may comprise a border. The border is a region comprising only the moulded material and surrounds the photovoltaic module. The border may comprise one or more connecting elements. The connecting elements may be used for connecting two or more floating solar panels to each other, to the seabed, bank or other structure. The connecting elements may be for example pins, hooks, tubes, rings or pegs configured to receive ropes, rods, tabs or other connecting means.

The assembly may comprise one or more walkways configured to support a load of at least 70 kg. These areas may be stepped on by an operator for assembly, maintenance, cleaning or decommissioning.

The walkways may be located in all or part of a border of the moulded base and may comprise a material of a different colour compared to the remainder of the assembly.

The mass of the assembly may be between 100 and 650 kg. The dimensions of the width and the length of the assembly may be between 1 and 2.4 metres, while the depth of the assembly may be between 0.08 and 0.4 metres. The thickness of the concrete may vary between 0.008 m and 0.035 m.

The invention further provides a method of manufacturing an assembly as described above, the method comprising:
(a) preparing a concrete mixture,
(b) partially embedding a photovoltaic module in the concrete mixture using a mould,
(c) setting the concrete mixture.

The concrete mixture preferably contains fibers and comprises the features described above.

Optionally, step (b) may comprise in the following order:
(b1) pouring the concrete mixture into the mould, and
(b2) placing the photovoltaic module on the fresh concrete.

At step (b2), any other elements, such as connecting elements may also be partially embedded in the concrete. The amount of concrete may be precisely controlled and any excess compressed in subsequent steps.

Step (b) of the method may further comprise a step (b3) of applying pressure to the partially embedded photovoltaic module. This may counteract any tendency of the photovoltaic module to float over the concrete mixture.

Alternatively to steps b1 - b3, step (b) of the method may comprise the following steps in the following order:
(b4) placing the photovoltaic module in the mould, and
(b5) pouring the concrete mixture into the mould.
This alternative allows more precise control of the amount of concrete added to fill the mould as the mould may be open at the inferior surface of the assembly.

The invention further provides a platform comprising an array of solar panel assemblies connected to each other through connecting elements.

### BRIEF DESCRIPTION OF THE DRAWINGS

To complete the description and in order to provide a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:
Fig. 1 shows an illustration of a assembly according to a first embodiment of the invention.
Fig. 2 shows an illustration of several solar panel assemblies of the first embodiment arranged as a floating platform.
Fig. 3 shows an illustration of several solar panel assemblies of the first embodiment arranged as a floating platform in which treadable areas comprise a concrete of a darker colour.
Fig. 4 shows a first step of a preferred method of manufacturing the assembly of the invention, showing the placement of the second material, having a low density, in the mould, previously to pouring the concrete.
Fig. 5 shows a second step of the method of manufacturing the assembly of the invention.
Fig. 6 further shows the second step of the preferred method of manufacturing the assembly of the invention.
Fig. 7 further shows the second step of the preferred method of manufacturing the assembly of the invention in which concrete is evenly spread.
Fig. 8 shows a third step of the preferred method of manufacturing the assembly of the invention in which the concrete is left to set.
Fig. 9 shows the step of levelling the photovoltaic module.
Fig. 10 shows a further step of the method of manufacturing the assembly of the invention in which weights are placed on the superior surface of the photovoltaic panel.
Fig. 11 shows the appearance from below, of the monolithic assembly obtained, in an embodiment wherein the underside is not covered with concrete.

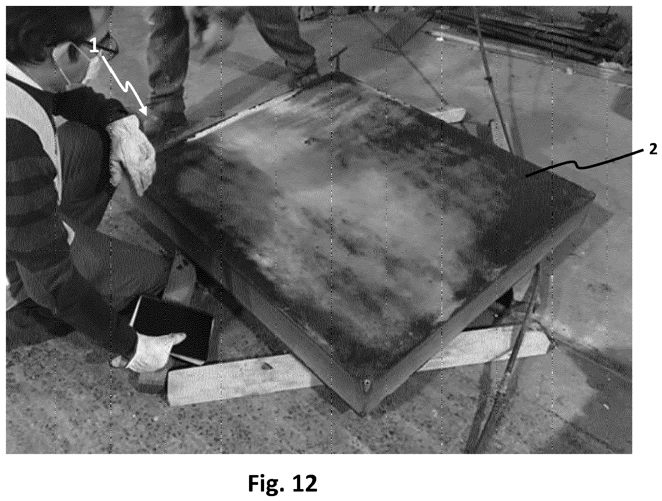

Fig. 12 shows a product devoid of photovoltaic module that may serve as a treadable floating element, and that constitutes an invention per se.
Fig. 13 shows the inventive assembly floating in water.
Fig. 14 shows three solar panel assemblies and a floating element (without photovoltaic module) assembled to form a platform.
Fig. 15 shows an operator standing on the assembled platform of fig. 14.
Fig. 16 shows the assembled platform such that its relation to the level of the water can be observed.
Fig. 17 shows a ring on the border of the superior face of a floating solar platform of the invention, wherein the ring is used to house a rod configured to facilitate manipulation of the assembly.
Fig. 18 illustrates a cross-section of a assembly floating, the underside not covered by the concrete.
Fig. 19 illustrates a cross-section of a assembly according to a third preferred embodiment in which the second material is completely surrounded by the concrete matrix.
Fig. 20 shows example dimensions of the assembly of the previous figure.
Fig. 21 illustrates a cross-section of a assembly according to a fourth preferred embodiment wherein connecting channels are embedded in the concrete matrix.

### DESCRIPTION OF PREFERRED EMBODIMENTS OF THE INVENTION

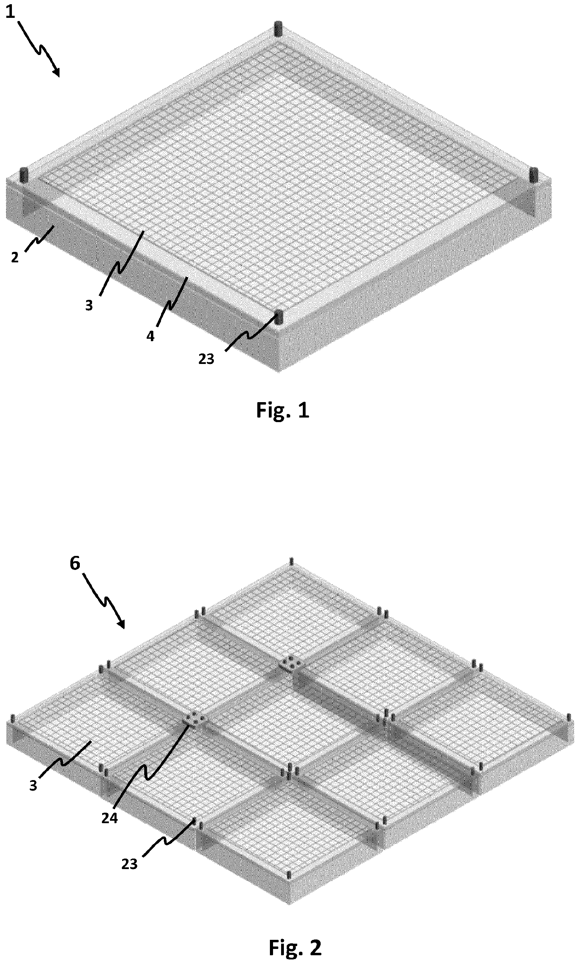

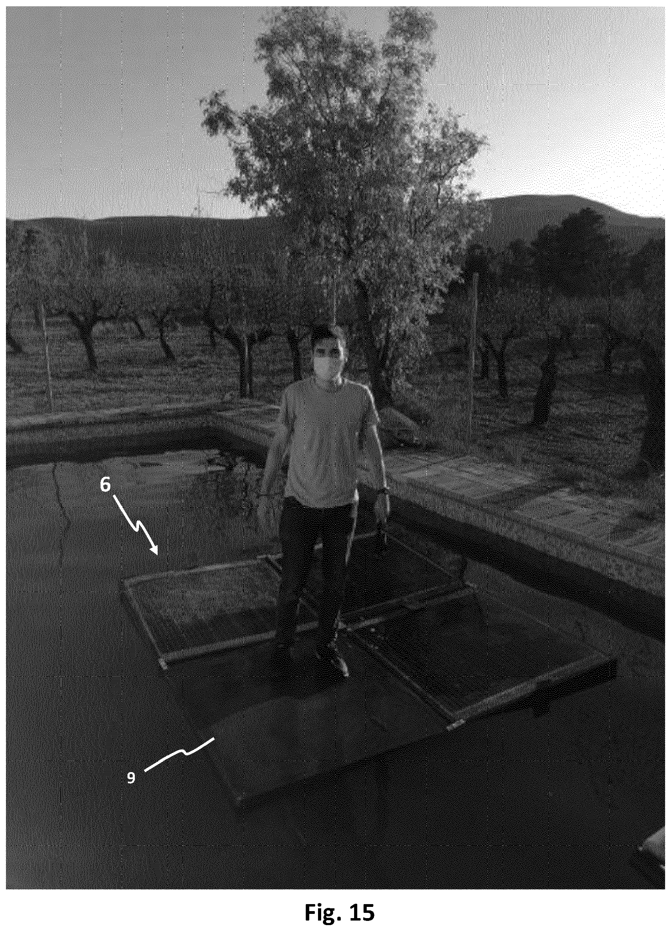

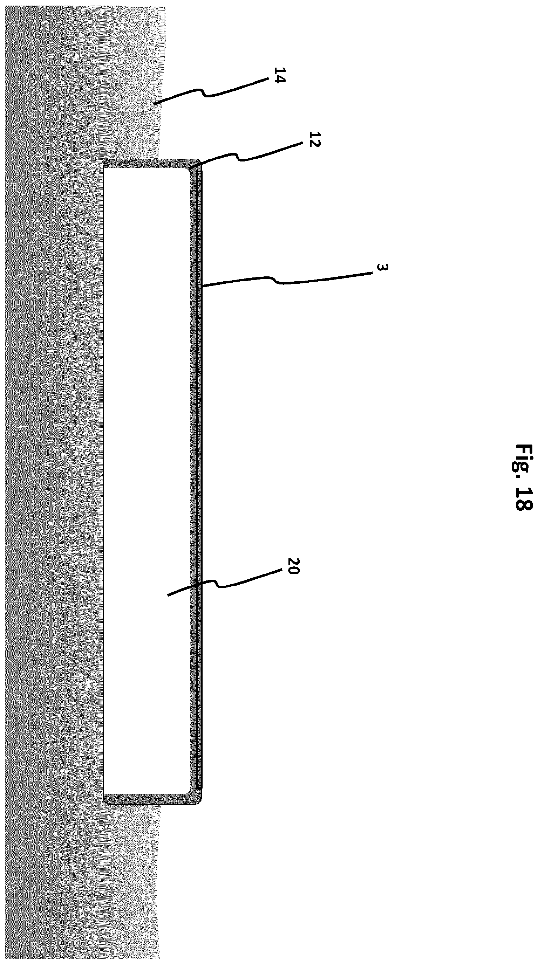

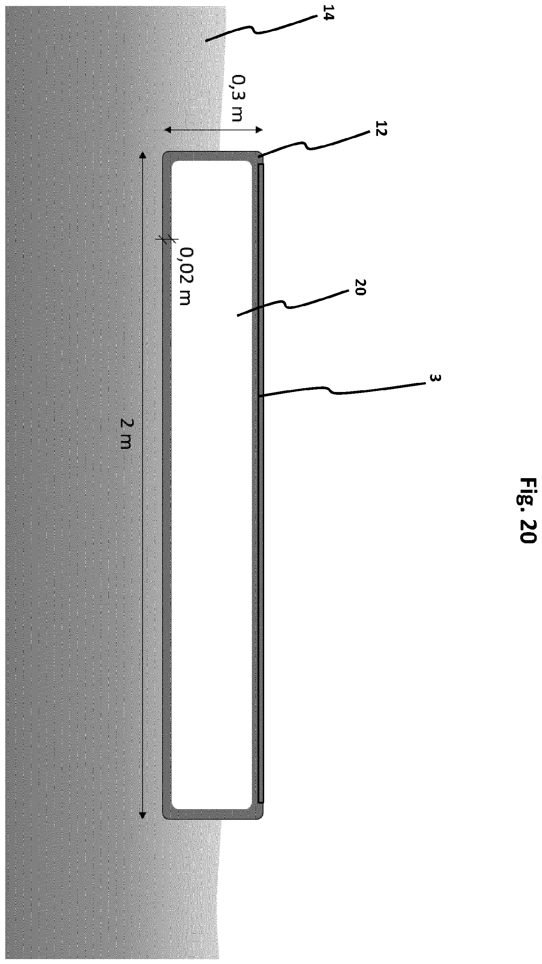

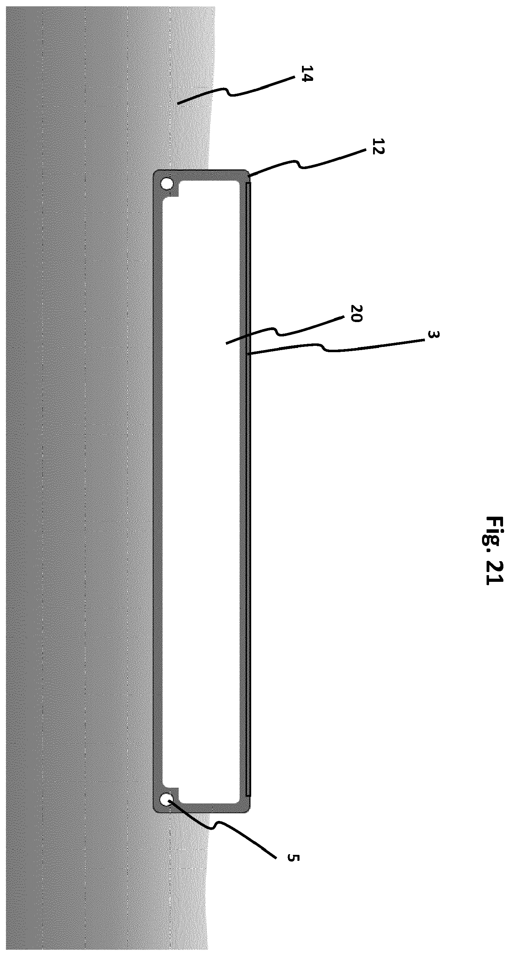

According to an embodiment, and as shown in Fig. 1 (or Figs 18 to 21 for example), the assembly 1 of the invention comprises a concrete base 2, a photovoltaic panel 3 embedded in the concrete base, and a concrete border 4 around the photovoltaic panel 3 which may house additional elements which may be embedded or mounted on the concrete border. In this case, the concrete border 4 holds partially embedded connecting pins 23 which are adapted to connect the floating panels with one another to form a floating platform 6, as shown in Fig. 15 for example.

The integration of the photovoltaic panel onto the concrete base improves the integrity of the solar panel and reduces the risk of damage during handling and transportation and reduces the risk of the photovoltaic panel being accidentally or deliberately separated from the base when in use.

As discussed above, the embodiments shown constitute monolithic blocks, practically devoid of added pieces.

The photovoltaic panel has a vertical perimetral surface of a height hₘₐₓ. A height h of the perimetral surface is in intimate contact with the concrete of the base, wherein hₘᵢₙ ≤ h ≤ hₘₐₓ such that the photovoltaic panel is preferably flush with the concrete border or slightly protruding thereof of it. The minimum height of the interface between the perimetral surface and the concrete hₘᵢₙ may be determined by the person skilled in the art as the minimum interface height required to provide sufficient adhesion between the photovoltaic module and the material of the base to keep the assembly tight.

The concrete used in this application is preferably a self-compacting mortar with a compression resistance between 60 and 200 MPa. The concrete preferably contains between 60 and 180 kg/m³ of microfibers. Its flexural strength is preferably between 10 and 30 MPa. The fibre content of the concrete increases its toughness to absorb minor bumps and impacts without damage, thus improving the integrity of the panel. Lower concrete densities are preferred to improve the floating properties.

Therefore, the concrete may be optimised to have low density, high bonding to the photovoltaic panel and low water absorption.

Fig. 2 shows an example of a floating platform 6 comprising the assembly of fig. 1. In this case, the pins 5 at the corners of four adjacent floating panels are held together by a tab 7, although alternatives such as chains, rods, tubes or other connecting means may be used. The assemblies of the first preferred embodiment are of a uniform square shape, with dimensions of the superior surface being 1.2 x 1.2 m including a border of 15 mm. As such, the assemblies are simple to arrange into a platform without using a raft structure and with minimal use of profiles, rods, glues, anchors, screws and the like. Similarly, the platform 6 is simple to disassemble wherein only the tabs 7 must be removed.

The flat and uniform shape of the solar panel assemblies also allows these to be stacked and palletised during transportation, although the solar panel assemblies may be produced in any shape and the floating platform may comprise panels in a combination of shapes.

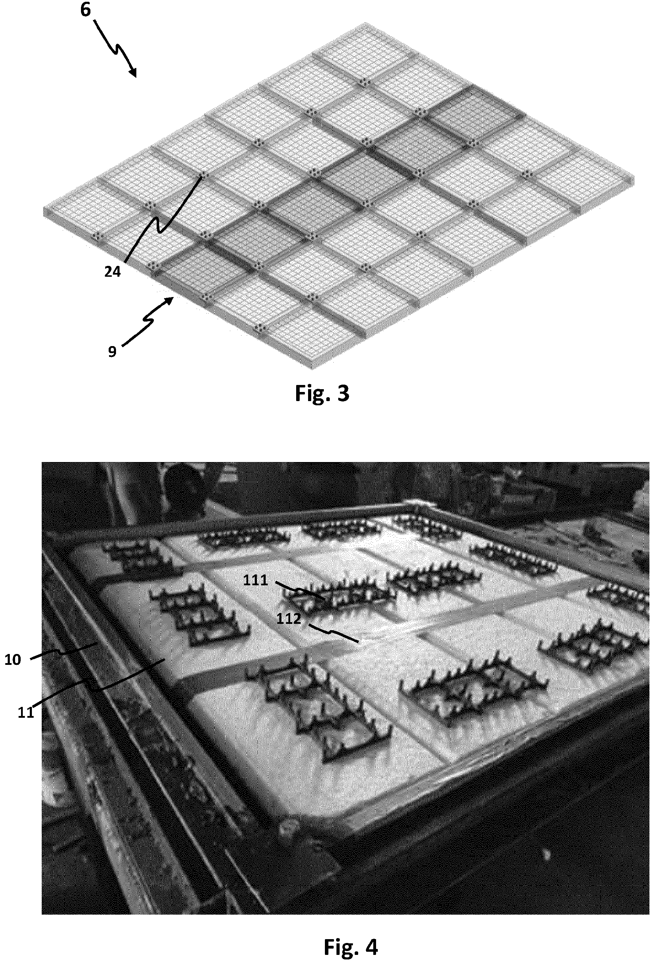

Fig. 3 shows a platform 6 comprising the solar panel assemblies of the first embodiment of the invention. The platform is configured such that an operator can walk on its surface while the panels are in the water, for example to further assemble the platform or to carry out maintenance or cleaning works. In this platform, a treadable area 9 can be identified by a darker colour. In this case, the entire central row of panels may comprise a second type of concrete, although alternatively individual panels may contain areas of different types of concrete. It is preferred that the second type of concrete has a different colour to distinguish it from the first type. In general, it is preferred that lighter colours of concrete are used where possible to minimise heat absorption.

Examples of maintenance works which may be carried out on such a platform include the repair of solar panel assemblies where the photovoltaic panel is damaged and/or has stopped working. Such a repair may involve gluing a new photovoltaic panel on top of the old one *in situ.* As such, the treadable areas 9 of the platform 6 preferably are configured to support the weight of an operator and various tools and materials. The cleaning of the surface of the platform may also be easily automated and a cleaning robot may be used due to the smoothness of the superior surface.

Fig. 4 shows an initial step of manufacturing the assembly of the invention according to a preferred method. In this method, the floating elements 11 (having a very low density) are placed in a mould 10. Then separators 111 can be placed on top of the floating parts 11. An adhesive strip 112 can be used to hold the floaters in correct position.

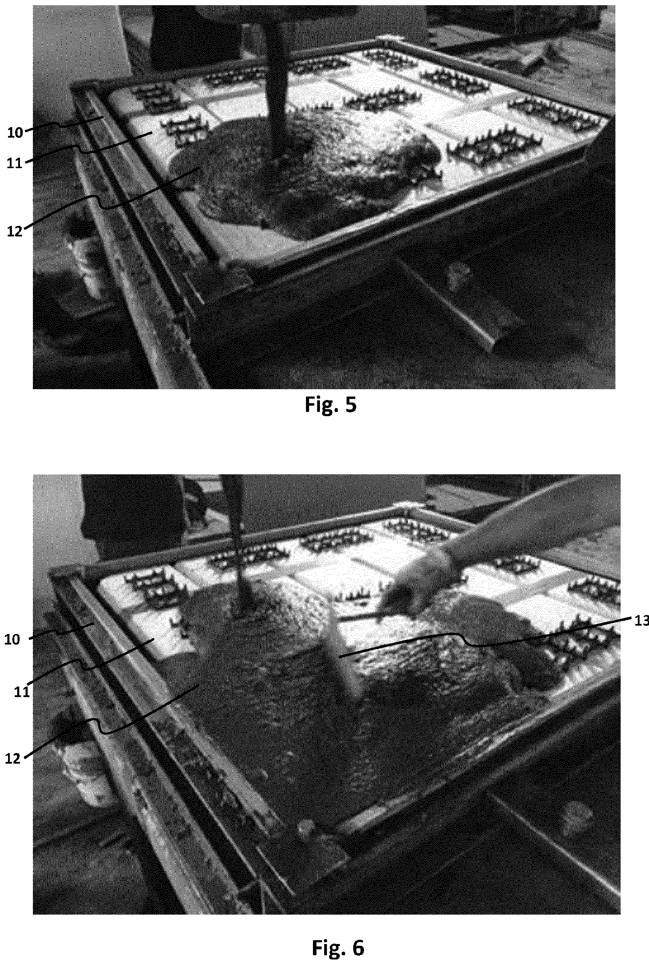

Fig. 5 shows a subsequent step of the manufacturing method wherein a concrete mixture 12 (including reinforcing fibers) is poured into the mould 10 over the second material 2-21, in this case an expanded polystyrene. Before pouring the reinforced mixture, separators may be placed to set a separation between the floating material and the photovoltaic module.

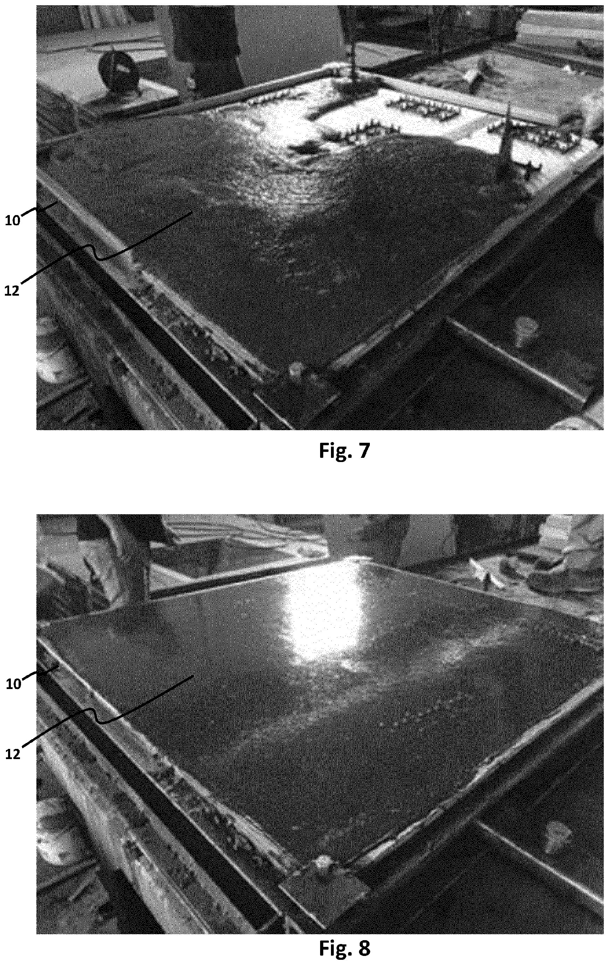

Figs. 6 and 7 further show this process wherein a tool 13 may be used manually or automatically to spread the concrete mixture 12 through the cavity of the mould, to prepare the superior surface before embedding the photovoltaic module.

Fig. 8 shows the sub product before adding the photovoltaic module 3. This subproduct can be considered as a separate invention, specifically a floating element that can be used as an easily handling platform for many purposes. Therefore, herein also is disclosed a base comprising a concrete 12 enclosing at least one volume 20 filled with a second material 21 or a gas, the volume and the second material or gas being selected such that the density of the assembly 1 is less than 1000 kg/m³, the concrete comprising reinforcing fibres. In other words, it is an invention by itself, without a photovoltaic module, which can serve, for example, as a platform designed to support maintenance personnel. Optional features of the floating element correspond to the optional features of the assembly, whenever applicable.

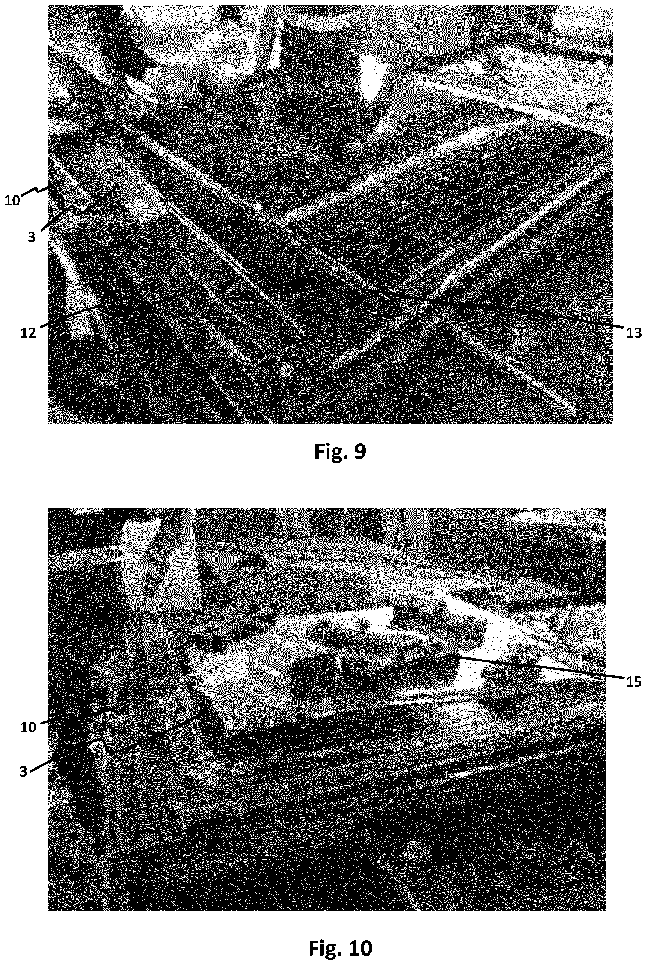

Fig. 9 shows the moment just after having embedded the photovoltaic module 3, the concrete still not set.

Fig. 10 shows the setting of the concrete 12 in the mould. Weights 15 or other forms of pressure may be applied to the surface of the photovoltaic panel 3 to keep it in position to be flush with the concrete as the photovoltaic panel 3 has a tendency to float in the unset concrete.

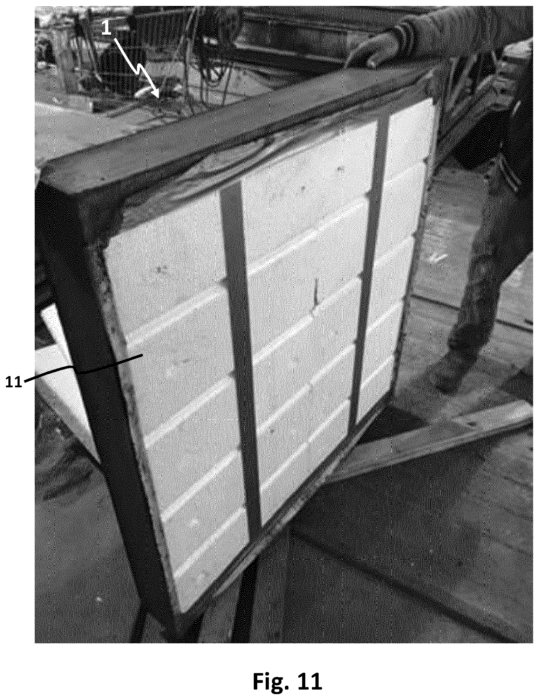

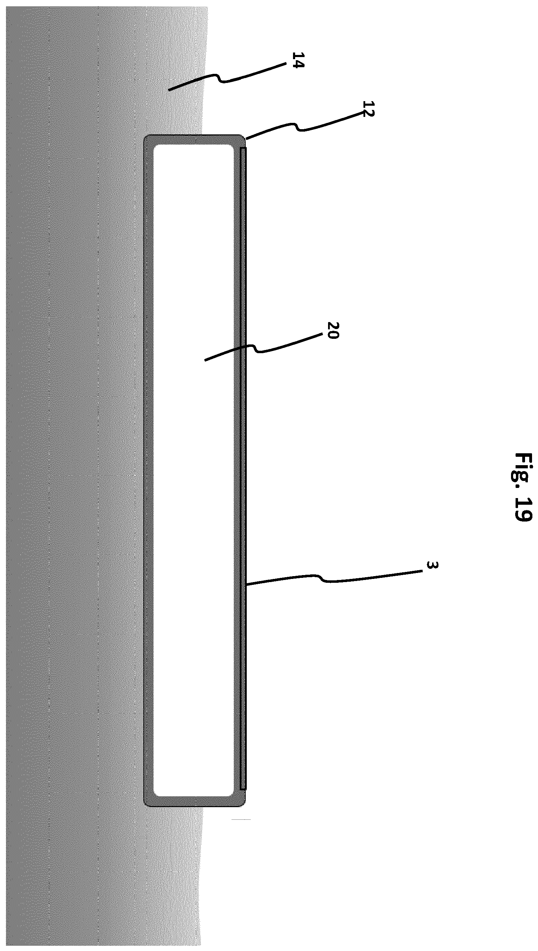

Fig. 11 shows the product of this process once the concrete has set. In this particular embodiment the expanded polystyrene is left uncovered. In other embodiments, such as that shown in fig. 19, the back side of the element is totally covered with concrete.

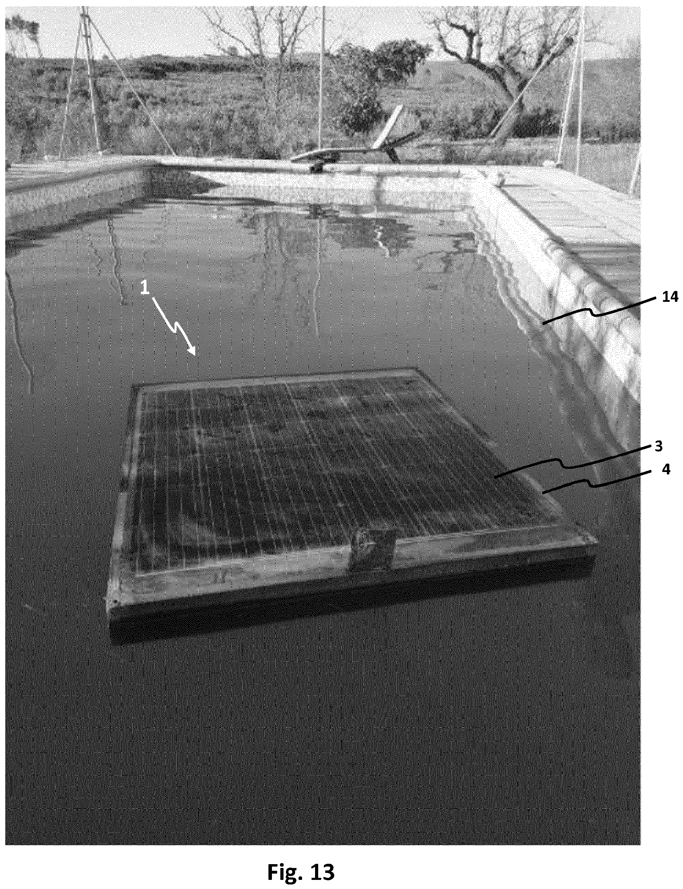

Fig. 13 shows the assembly 1 floating in water 14. The figure shows that the level of the water is around few cm below the superior surface of the assembly.

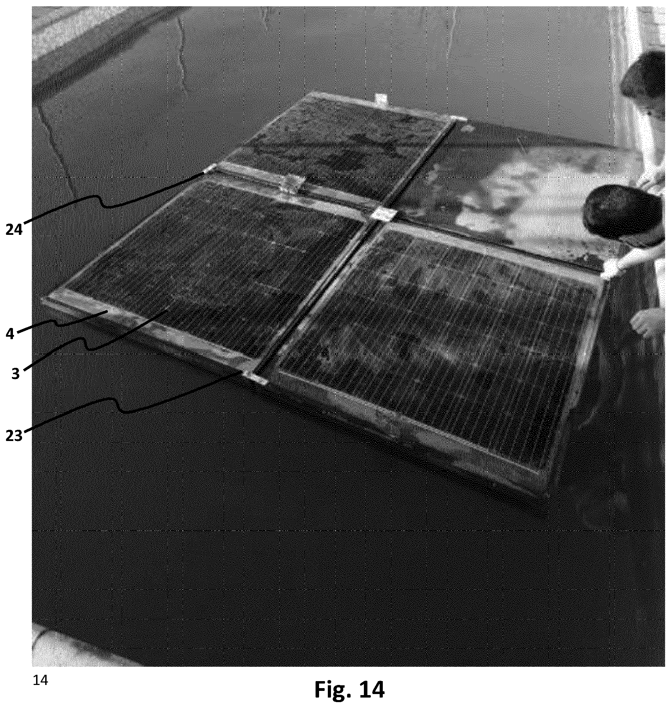

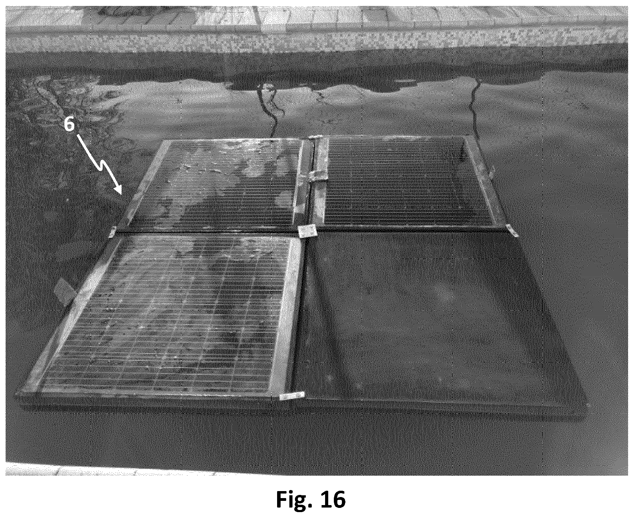

Fig. 14 shows the process of assembling two more panels to the platform 6. Fig. 15 shows a practical result, the panels are able to hold a person standing up-right. Fig. 16 shows the assembly 6 form another point of view.

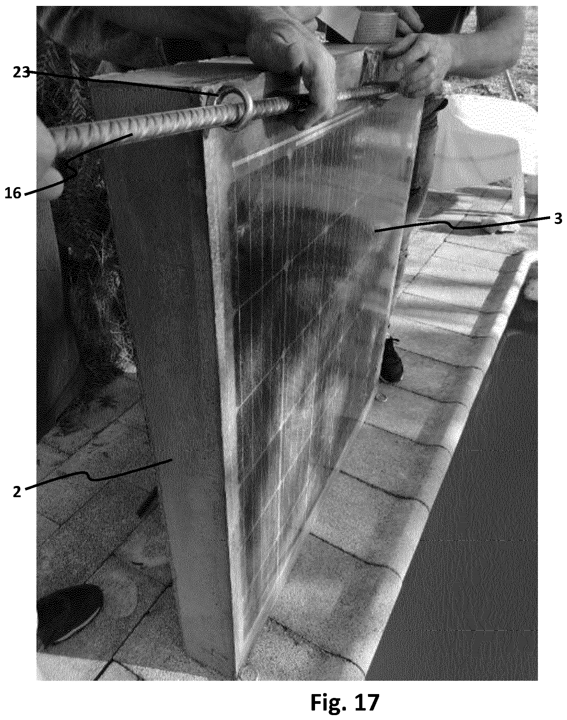

Fig. 17 shows a side view of a assembly according to the invention in which, instead of pins, the connecting elements 5 are rings partially embedded in the concrete border 4 and configured to house a rod 16 for controlling the position of the floating solar panel.

Figures 18 to 21 are schematic sections showing the different components of the assemblies of the invention according to different embodiments, floating in water 14.

All the figures show the monolithic character that can be obtained with the characteristics of the invention.

In this text, the term "comprises" and its derivations (such as "comprising", etc.) should not be understood in an excluding sense, that is, these terms should not be interpreted as excluding the possibility that what is described and defined may include further elements.

The invention is obviously not limited to the specific embodiments described herein, but also encompasses any variations that may be considered by any person skilled in the art within the general scope of the invention as defined in the claims.

## Claims

1. Assembly (1) comprising a base (2) and a photovoltaic module (3), **characterized in that** the base comprises a concrete (12) enclosing at least one volume (20) filled with a second material (21) or a gas, the volume and the second material or gas being selected such that the density of the assembly (1) is less than 1000 kg/m³, the concrete comprising reinforcing fibres.

2. Assembly (1) according to claim 1, wherein the photovoltaic module (3) is partially embedded in the base (2).

3. Assembly (1) according to claim 1, wherein the photovoltaic module (3) is embedded in the base (2), such that all their vertical sides and back side are in contact with the concrete.

4. Assembly (1) of claim 1 wherein the second material comprises an expanded polystyrene.

5. Assembly (1) of any of the preceding claims wherein the concrete (2) has a compressive strength between 60 MPa and 200 MPa and the concrete (2) has a flexural strength between 10 and 30 MPa.

6. Assembly (1) according to any of the preceding claims, wherein the concrete (2) has an aggregate size of up to 4 mm in diameter and/or wherein the concrete (2) has a volumetric fibre content comprised between 0.7% and 2.5%, the fibres being made of steel, glass or carbon.

7. Assembly, wherein at least one of the surfaces of the photovoltaic module (3) is made ofa resin, preferably an epoxy resin, such that the concrete is in contact with the resin.

8. Assembly according to claim 7, wherein the resin comprises reinforcements, preferably made of glass fiber or carbon fiber.

9. Assembly (1) according to claim 7 or 8, wherein the front surface of the photovoltaic module is further made of a transparent resin, preferably an epoxy resin, preferably comprising glass reinforcements.

10. Assembly (1) of the preceding claim wherein the channels (5) are formed by pipes embedded in the concrete matrix and extend longitudinally and/or transversally from one corner of the base (2) to another and wherein the ends of the pipes are trumpet-shaped.

11. A method of manufacturing a assembly (1), the method comprising:
(a) preparing a concrete mixture (12) comprising reinforcing fibers;
(b) partially embedding a photovoltaic module (3) and at least partially embedding a volume of a second material in the concrete mixture using a mould (10); and
(c) setting the concrete mixture.

12. The method of claim 11 wherein step (b) comprises in the following order:
(b1) placing parts made of a low density material (21);
(b2) pouring the concrete mixture (12) into the mould (10) over the low density material (21); and
(b3) placing the photovoltaic module (3) in the mould (10), by pressing it against the concrete mixture.

13. The method of claim 11 wherein step (b) further comprises:
(b4) applying pressure to the partially embedded photovoltaic module (3).

14. The method of claim 11 wherein step (b) comprises in the following order:
(b5) placing the photovoltaic module (3) in the mould (10) upside down,
(b6) pouring the concrete mixture (12) into the mould (10) on the back side of the photovoltaic module (3);
(b6) before setting, embedding parts (21) of the second material in the fresh concrete by applying pressure on the parts (21) until the concrete sets.

15. A platform (6) comprising an array of solar panel assemblies (1) according to any of claims 1-10 connected therebetween.
